(19) Europäisches Patentamt

European Patent Office

Office européen des brevets

(11) **EP 4 116 051 B1**

(12) **EUROPEAN PATENT SPECIFICATION**

(45) Date of publication and mention
of the grant of the patent:
**24.12.2025 Bulletin 2025/52**

(21) Application number: **22182964.1**

(22) Date of filing: **05.07.2022**

(51) International Patent Classification (IPC):
***B27K 5/00*** (2006.01)

(52) Cooperative Patent Classification (CPC):
**B27K 5/0075; B27K 5/009;** Y02E 50/10

(54) **METHOD FOR THE THERMAL TREATMENT OF WOOD**

VERFAHREN ZUR THERMISCHEN BEHANDLUNG VON HOLZ

PROCÉDÉ POUR LE TRAITEMENT THERMIQUE DU BOIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2021 BE 202105525**

(43) Date of publication of application:
**11.01.2023 Bulletin 2023/02**

(73) Proprietor: **Cras NV
8790 Waregem (BE)**

(72) Inventor: **Cras, Frédéric
8790 Waregem (BE)**

(74) Representative: **Brantsandpatents bv
Pauline Van Pottelsberghelaan 24
9051 Ghent (BE)**

(56) References cited:
**CN-A- 110 549 450      CN-A- 111 605 013
CN-A- 112 454 576      CN-B- 108 582 377
US-A1- 2014 124 354**

## Description

## TECHNICAL FIELD

The present invention relates to a method for thermally treating wood at a high temperature in an autoclave at reduced pressure, in particular to a method in which wood is modified by multiple chemical and physical reactions by exposing the wood to temperatures at which pyrolysis starts.

## PRIOR ART

Methods of thermally treating wood are known in the art. The default methods used in industry consist of a sequence of three steps.

In a first step, pre-dried wood is preheated in a cell to a temperature of approximately 180°C to 230°C, where measures are taken to prevent ignition of the wood. Then, in a second step, the wood is effectively thermally treated by keeping the wood at this temperature for a period of time, still preventing the wood from igniting. In a final third step, the wood is cooled to a temperature lower than 100°C so that the wood can be exposed to the environment again without the risk of ignition.

A known technique to avoid ignition of the wood is to introduce superheated steam into the cell in which the wood is heated. The oxygen in the cell is replaced by the superheated steam.

These known methods have the following drawbacks or problems. The wood must be pre-dried before it can be thermally treated. The wood is therefore first heated in another device and dried and cooled again, after which it is heated again in the cell. As a result, a lot of energy is lost. Heating the wood and avoiding ignition of the wood requires the use of superheated steam. Heating water to steam requires a great deal of energy, making this an expensive method. According to the prior art, water is used to cool the wood. The high temperatures in the cell require up to 80 liters of water per 1 $m^3$ of treated wood, which produces up to 150 $m^3$ of steam per 1 $m^3$ of treated wood. The water consumption is high with these known methods. In addition, gases and volatile chemical components resulting from the chemical conversion of the wood are inevitably entrained with the steam, causing pollution.

Other known methods use chemicals to modify the wood. During the drying process in the cell, the wood is impregnated with, for example, acetic acid. These chemicals cause an additional environmental impact.

Methods for the thermal treatment of wood are known from US 2014/124354, CN 108 582 377, CN 110 549 450, CN 112 454 576, and CN 111 605 013.

US2014/124354 describes a process for the thermal-chemical modification treatment of wood is described, in which such a modification is obtained through multiple chemical reactions of the substances comprising the wood structure generated by exposing the wood to temperatures at which the pyrolysis phenomenon begins, i.e., in the range of 180°C-240°C, in a vacuum autoclave-cell while always maintaining the internal pressure lower than the atmospheric pressure, in a range of values of 70-350 mBar of absolute pressure, consisting in the steps of pre-heating, actual heat treatment, and cooling of a wood mass. However, it fails to provide for a reliable way of thermally treating wood at reduced pressure.

The aim of the invention is to provide a method which eliminates those disadvantages.

## SUMMARY OF THE INVENTION

In a first aspect, the invention relates to a method according to claim 1.

The linear increase of the temperature in the autoclave is advantageous for the gradual but rapid drying of the wood. Because the temperature rises linearly, thermal stresses in the wood are limited, limiting the chance of splitting or cracking of the wood. The constant pressure of at least 150 mbar and at most 300 mbar creates an oxygen-poor environment in the autoclave, which prevents the wood from igniting at high temperatures in the autoclave. Any micro-combustion of the wood quickly provides additional $CO_2$ and consumption of $O_2$, which prevents actual fire and prevents visible burning of the wood. No water or steam is needed to avoid ignition of the wood in the autoclave, avoiding unnecessary energy and water consumption and water pollution.

The pressure prevailing in the autoclave during thermal modification is at least 50 mbar and at most 150 mbar higher than during preheating. The applicant surprisingly found that a higher pressure during thermal modification leads to a higher loss of mass in the same unit of time, whereby the thermal modification can advantageously be carried out more quickly. The thermal modification only takes place by means of the high temperature of at least 180°C and at most 230°C, without adding chemicals or steam.

Preferred embodiments of the method are set out in claims 2-9.

A specific preferred form of the invention relates to a method according to claim 11.

The use of a deflector is advantageous to create an airflow in an autoclave through the wood and not around the wood. Because the air in the autoclave flows through the wood, a uniform and good thermal treatment of the wood is obtained.

In a second aspect, the invention relates to a use according to claim 15.

The use of a method according to the first aspect for woods such as ayous, fraké, tulipwood, softwood, poplar, or ash is particularly advantageous to modify these woods from a low durability class to a high durability class, making these woods suitable for outdoor use. The dimensional stability of these types of wood is greatly improved by the thermal modification, so that these light types of wood can be used as, for example, wall cladding. As a result, it is not necessary to use expensive and heavy types of wood for wall cladding, for example. This method is particularly advantageous for making domestic softwoods suitable for these applications, reducing the need for felling, and importing of tropical hardwoods, offering ecological benefits.

## DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In the context of this document, the wood moisture content (HV%) is the percentage share of the weight of the water in the wood relative to the total weight of the wood. The wood moisture content is calculated as:

$$HV\% = \frac{m_1 - m_0}{m_0} \cdot 100\%$$

Here $m_0$ is the oven-dry mass of the wood and $m_1$ the wet or non-dried mass of the wood. The oven-dry mass of the wood is determined by drying a test piece of the wood in an oven at a temperature of 103°C until the mass of the test piece no longer changes. The mass of the wood after drying at 103°C is the oven-dry mass.

In this document, equilibrium wood moisture content refers to a state of equilibrium, whereby the wood moisture content of wood at a certain temperature and relative humidity of the surrounding air no longer changes.

An autoclave is defined in this document as a closed pressure vessel in which a pressure is maintained and where the pressure in the autoclave serves to start, influence, or stop a process.

In a first aspect, the invention relates to a method for thermal treatment of wood, wherein the wood is modified by the thermal treatment. It comprises the steps of:

- placing the wood in an autoclave;
- preheating the wood by heating the autoclave;
- thermally modifying the wood at an autoclave temperature of at least 180°C and at most 230°C;
- cooling the wood;

wherein the temperature in the autoclave increases linearly during the preheating of the wood, wherein a constant pressure of at least 150 mbar and at most 300 mbar prevails in the autoclave and wherein during thermal modification a pressure prevails in the autoclave which is at least 50 mbar higher than during preheating and at most 150 mbar higher than during preheating, wherein by constant pressure is meant that the pressure varies at most ± 10%.

The autoclave is a longitudinally extending cell. The autoclave is insulated and vapor impermeable. The autoclave comprises an airtight chamber for treating wood. The autoclave preferably comprises a base frame for supporting the wood in the autoclave. The base frame can preferably be slid or wheeled in and out of the autoclave. The autoclave comprises a heating system for heating the autoclave. The heating system may be electrical or include radiators or other suitable means. The autoclave comprises a vacuum pump for creating a negative pressure in the autoclave. The autoclave comprises a cooling system for cooling the autoclave. The cooling system preferably comprises cooling tubes around the airtight chamber. The autoclave is an adiabatic system.

The wood is preferably placed outside the autoclave on the sliding or wheeled base frame and slid or wheeled into the autoclave. The autoclave is sealed airtight after application of the wood.

The wood is preheated in the autoclave by heating the autoclave. The autoclave is heated to a temperature of at least 180°C and at most 230°C, as necessary for the next step of thermally modifying the wood. The autoclave is heated by means of the heating system. During heating, a constant pressure of at least 150 mbar and at most 300 mbar prevails in the autoclave.

Preferably, a constant pressure of at least 175 mbar, more preferably at least 200 mbar, even more preferably at least 225 mbar and even more preferably at least 250 mbar prevails in the autoclave.

Preferably, a constant pressure of at most 290 mbar, more preferably at most 280 mbar, even more preferably at most 270 mbar and even more preferably at most 260 mbar prevails in the autoclave.

By constant pressure is meant that the pressure varies at most ±10%, preferably at most ±5%, more preferably at most ±3%, even more preferably at most ±2% and even more preferably at most ±1%.

A constant pressure of at least 150 mbar and at most 300 mbar ensures a low air density and creates an oxygen-poor environment in the autoclave, which prevents the wood from igniting at high temperatures in the autoclave. At a temperature of 25°C and a pressure of 1013 mBar, the air density is 1.185 kg/m$^3$. At a temperature of 180° C and an air pressure of 200 mbar, the air density is 0.154 kg/m$^3$. This is a reduction of approximately 87%. As a result, the oxygen content during heating in the autoclave is already very low when the high temperatures between 180°C and 230°C are reached, at which point the wood could possibly ignite. Assuming that the ratio between the volume of wood in the autoclave and the volume of the airtight chamber of the autoclave is equal to 3:1, then at a temperature of 180°C and a pressure of 200 mbar in the autoclave, at most 0.06 kg of wood can be burned up per m$^3$ of wood in the autoclave, after which all $O_2$ is burned up and converted into $CO_2$. Assuming a mass density of wood between 400 and 650 kg/m$^3$, this results in a possible mass loss due to combustion of 0.015% at a temperature of 180°C and a pressure of 200 mbar in the autoclave. Any micro-combustion of the wood quickly provides additional $CO_2$ and consumption of $O_2$, which prevents actual fire and prevents visible burning of the wood. No water or steam is needed to avoid ignition of the wood in the autoclave, avoiding unnecessary energy and water consumption and water pollution.

The temperature in the autoclave rises linearly during preheating of the wood. This is advantageous for the gradual, but due to the pressure in the autoclave of at least 150 mbar and at most 300 mbar, fast drying of the wood. Because the temperature rises linearly, temperature shocks and thermal stresses in the wood are limited, limiting the chance of splitting and/or cracking of the wood. The linear increase in temperature also prevents water in the wood from boiling quickly and damaging the wood. During the preheating of the wood, the wood is additionally dried. Preferably, the wood is dried to a wood moisture content of at most 3%, more preferably at most 2%, even more preferably at most 1% and even more preferably 0%. This is necessary for thermal modification by means of high temperatures.

During thermal modification, chemical/physical reactions take place in the wood. Due to the high temperature of at least 180°C and at most 230°C, there is a pyrolysis reaction in the wood. In this reaction, resin, cellulose, and hemicellulose are converted in the wood. This reaction is influenced by the temperature during and the duration of the step. The type of wood and dimensions of beams or planks into which the wood is cut are also determining factors. The thermal modification darkens the color of the wood and makes the color more uniform over the surface of the wood. The thermal modification is also beneficial for the durability of the wood. The wood is classified into durability classes 1 to 5. The durability class has been determined in accordance with the EN-350:2016 standard. Wood of durability class 1 is the most durable and of durability class 5 the least durable. Wood of durability class 5 can be converted to durability class 1 by thermal modification. This increases their economic value. Thermally modified wood also has less tendency to absorb water, as the equilibrium wood moisture content has decreased, making it more suitable for outdoor use in a variety of weather conditions. The thermally modified wood is also dimensionally more stable. When used, for example, as wall cladding or as a patio covering, the wood will only change in size to a limited extent. This prevents the wood from curling up or coming loose from a facade or outer wall, for example. The surface of the modified wood is also harder and more scratch resistant. The disadvantage is that the wood is less strong and more brittle. As a result, modified wood is less suitable as a construction material.

During thermal modification, a pressure prevails in the autoclave that is at least 50 mbar and at most 150 mbar higher than during preheating.

The applicant surprisingly found that a higher pressure during thermal modification leads to a higher loss of mass in the same unit of time. For "black locust" the mass loss after thermal modification for 3 hours at 180°C increases from 6% to 8% with an increase in pressure from 170 mbar to 320 mbar, for larch from 4% to 5.5% and for oak from 3.5 % to 4.2%. The loss of mass in a unit of time is an indication of the degree of thermal modification of the wood, because during thermal modification volatile gases disappear from the wood. The thermal modification can thus advantageously be carried out more quickly. The pressure in the autoclave preferably does not rise more than 150 mbar to maintain an oxygen-poor environment. The thermal modification only takes place by means of the high temperature of at least 180°C and at most 230°C, without adding chemicals or steam. As a result, a method according to the present invention is more energy efficient and ecological.

The wood is cooled down using the cooling system. No additional water or moisture is sprayed into the airtight space in the autoclave, so that there is no water consumption or pollution during the cooling of the wood. The autoclave remains airtightly closed during cooling until a temperature of at most 90 °C is reached in the autoclave. This guarantees that after opening the autoclave, the wood does not ignite due to contact with oxygen from the outside environment. Cooling the wood is also advantageous for conditioning the wood. Moisture is once again absorbed into the wood from the autoclave. The wood hereby achieves a wood moisture content of preferably 6% to 8%. This is beneficial to prevent the wood from being too dry, after which it could split or crack when exposed to the outside environment.

In a preferred embodiment, the temperature in the autoclave increases during preheating by at least 5°C per hour and at most 9°C per hour.

Preferably, the temperature rises by at least 6°C per hour, more preferably by at least 6.5°C per hour.

Preferably, the temperature rises at most 8°C per hour, more preferably at most 7.5°C per hour.

Preheating at least 5°C per hour is beneficial for quickly reaching the desired temperature for thermal modification, while increasing the temperature by up to 9°C per hour is beneficial to limit thermal shocks and stresses in the wood. In addition, a minimum period of preheating is required to dry out the wood sufficiently, so that a wood moisture content for thermal modification is achieved as previously described. An increase in temperature within the specified limits ensures a sufficiently long period for drying the wood to the desired wood moisture content.

According to a preferred embodiment, the temperature rises to a maximum of 180°C during preheating in the autoclave. This is advantageous because the thermal modification of the wood takes place at high temperatures between 180°C and 230°C. By limiting the temperature to a maximum of 180°C during preheating, thermal modification of the wood during preheating can be avoided, so that only drying of the wood occurs. This is also advantageous if the wood moisture content of the wood has not yet fallen to the desired wood moisture content for thermal modification when reaching 180°C in the autoclave. In that case, the preheating step can be extended until the desired wood moisture content is reached.

According to a preferred embodiment, during the cooling of the wood, the temperature in the autoclave drops by at least 15°C per hour and at most 25°C per hour.

The temperature preferably drops by at least 17°C per hour, more preferably by at least 19°C per hour and even more preferably by at least 21°C per hour.

The temperature preferably drops at most 24°C per hour, more preferably at most 23°C per hour and even more preferably at most 22°C per hour.

The temperature in the autoclave preferably drops as quickly as possible so that the wood can be removed from the autoclave as quickly as possible, and a new load of wood can be placed in the autoclave. On the other hand, the temperature in the autoclave drops slowly enough to allow the wood to cool slowly enough to avoid major thermal shocks and stress in the wood and condition the wood as previously described. Cooling down too quickly will also cause condensation in the autoclave. A drop of at least 15°C and at most 25°C per hour is a suitable range for these purposes.

According to a preferred embodiment, the pressure in the autoclave increases incrementally during the thermal modification of the wood. With each step, the pressure rises at least 25 mbar, preferably at least 30 mbar and more preferably at least 35 mbar. With each step, the pressure rises at most 50 mbar, preferably at most 45 mbar and more preferably at most 40 mbar.

The pressure is increased in at least one step, preferably in at least two steps, and more preferably in at least three steps. Preferably, the pressure is increased equally in each step.

As previously described, a higher pressure during thermal modification is advantageous for accelerating the thermal modification. A disadvantage, however, is that by increasing the pressure, the wood also becomes darker than with a thermal modification at lower pressure.

By incrementally increasing the pressure during thermal modification, a faster thermal modification of the wood is obtained, while the wood also darkens less than with a thermal modification that is carried out completely at the higher pressure.

According to a preferred embodiment, the temperature in the autoclave increases incrementally during the thermal modification of the wood. With each step, the temperature increases by at least 10°C, preferably by 11°C, more preferably by 12°C, even more preferably by 13°C and even more preferably by 14°C. With each step, the temperature increases by up to 20°C, preferably by up to 19°C, more preferably by up to 18°C, even more preferably by up to 17°C and even more preferably by up to 16°C.

A higher temperature results in a faster thermal modification of the wood. A disadvantage, however, is that by increasing the temperature, the wood also becomes darker than with a thermal modification at lower temperature. By incrementally increasing the temperature during thermal modification, a faster thermal modification of the wood is obtained, while the wood also darkens less than with a thermal modification that is carried out completely at the higher temperature.

According to a preferred embodiment, the step of thermally modifying the wood lasts at least 4 hours and at most 8 hours.

A good thermal modification is obtained by using a high temperature of at least 180°C and at most 230°C and by a sufficiently long duration of the thermal modification. A thermal modification of at least 4 hours is necessary to increase the durability class of the wood from 5 to at least 2 or preferably 1. Thermal modifications of more than 8 hours make the wood too brittle, making it difficult to process or install.

According to a preferred embodiment, planks or beams of wood are stacked on top of each other before being placed in the autoclave. Preferably, the stack is stacked on a base frame as in a previously described embodiment. At and between both ends of the stack of wood, slats are placed between each group of at most two stacked planks or beams of the stack of wood. This means that after at most two stacked planks or beams of the stack of wood, slats are placed at and between both ends of the stack of wood to separate groups of at most two planks or beams stacked on top of each other. This is advantageous because it allows airflows through the stack of wood, which is beneficial for drying and thermally modifying the wood. In groups of no more than two planks, there is sufficient space between them to achieve this positive effect. Preferably, slats are placed between each plank or beam of the stack of wood. The slats are also advantageous in preventing the planks or beams from deforming due to curling at the ends during drying and thermal modification. To avoid sagging and deformation of planks or beams between slats, the slats are spaced at most 0.8 m, preferably at most 0.7 m and more preferably at most 0.6 m. In order to have sufficient airflow through the stack, the slats have a spacing of at least 0.2 m, preferably at least 0.3 m. To prevent curling of ends of planks or beams, slats are placed at the ends of the stack of wood.

According to a further embodiment, the slats are hollow metal profiles. Metal slats are advantageous over wooden slats because wooden slats are also thermally modified when the wood is thermally modified. The slats become more brittle with each thermal modification, making them reusable only a limited number of times. This is not the case with metal profiles. Metal profiles are perfectly resistant to temperatures up to 230°C. An additional advantage when using hollow metal profiles is that the hollow space serves as an air duct to move air through the stack of wood. In contrast to solid wooden slats, hollow metal profiles do not block the airflow. Heat is transferred to the wood from the airflow through the metal wall of the hollow metal profiles.

According to a preferred embodiment, the autoclave extends from a first end to a second end in a longitudinal direction. Air in the autoclave is moved in a first direction transverse to the longitudinal direction by means of fans at the first end and at the second end. The air impinges on an opposing wall and moves longitudinally along the opposing wall from the first end toward the second end and from the second end toward the first end, respectively. By these two opposing airflows, the air in the autoclave is forced to move between the first end and the second end in a second direction, opposite to the first direction, through the wood. The air impinges on a second wall of the autoclave, opposite the first wall, and moves along the second wall toward the first and second ends, whereupon the air is moved again in the first direction by the fans. In this way, warm air in the autoclave circulates through the wood, thermally modifying the wood in a uniform manner.

According to a further embodiment, at the first end of the autoclave, a deflector is rotated from a first position parallel to the first end of the autoclave to a second position about an axis of rotation. A deflector is rotated at the second end of the autoclave from a first position parallel to the second end of the autoclave to a second position about an axis of rotation. The axis of rotation is located at a first edge of the deflector closest to the fan at the first end and the second end of the autoclave, respectively. The deflector is rotated so far that a distance along the longitudinal direction of the autoclave between a second edge of the deflector, opposite the first edge, and wood in the autoclave is at most 50 cm. The deflector is preferably a plate, more preferably a metal plate. The metal plates are preferably mounted on a base frame which can be slid or wheeled in and out of the autoclave, as in a previously described embodiment. This makes it easier to rotate the deflector.

The use of a deflector is advantageous to create an airflow in an autoclave through the wood and not around the wood. This is particularly advantageous if the wood stacked in the autoclave does not extend completely from the first end to the second end of the autoclave. This leaves free space at the first end and/or second end. As a result, air at the first end and/or second end experiences less resistance, so that air preferably moves around the wood. By rotating the deflectors toward the wood, air is forced to flow through the wood. Because the air in the autoclave flows through the wood, a uniform and good thermal treatment of the wood is obtained.

According to a preferred embodiment, air is withdrawn from the autoclave via a condenser. Vapors and gases released from the wood during thermal modification are condensed into liquid in the condenser. In this way it is avoided that these vapors and gases are discharged into the outside environment via an air outlet, which has an ecological impact.

According to a preferred embodiment, the amount of liquid condensing per unit of time in the condenser is measured. A transition is made from preheating the wood to thermal modification if the amount of liquid condensing per unit of time is less than 5% of a total amount of liquid condensed in the condenser up to that point in time. Preferably, that amount of liquid condensing per unit of time is less than 4%, more preferably less than 3%, even more preferably less than 2% and even more preferably less than 1% of the total amount of liquid condensed up to that time in the condenser. The time unit is preferably one hour. The amount of liquid per unit of time that condenses during preheating is a measure of the amount of water that is extracted from the wood. If the amount of liquid that condenses per unit of time is very limited compared to a total amount that has condensed up to that point in time, this means that the wood dries only very little and that the wood moisture content corresponds to the desired wood moisture content for thermal modification, as in previously described embodiments.

The transition from preheating the wood to thermal modification can be done manually after an operator determines that the amount of liquid condensing per unit of time is less than 5% of a total amount of liquid condensed in the condenser up to that point in time. Alternatively, the transition occurs automatically after an autoclave control system measures that the amount of liquid condensing per unit of time is less than 5% of a total amount of liquid condensed in the condenser up to that time. Another possibility is that an operator determines a preheating time based on previous thermal treatments and measurements of the liquid that condenses per unit of time for each type of wood and preferably taking into account the dimensions of planks and beams.

According to a preferred embodiment, a temperature sensor is arranged in the wood in the autoclave for measuring the temperature in the core of the wood. At least one temperature sensor is fitted. The temperature sensor is advantageous for verifying that the core of the wood is sufficiently warm for thermal modification of the wood. Preferably, measured values of the temperature sensor are used for manually, preferably automatically, adjusting the temperature in the autoclave so that the core of the wood reaches a sufficiently high temperature for thermal modification in time.

In a second aspect, the invention relates to a use of a method according to the first aspect for the thermal treatment of ayous, fraké, tulipwood, softwood, poplar, or ash.

The use of a method according to the first aspect for woods such as ayous, fraké, tulipwood, softwood, poplar, or ash is particularly advantageous to modify these woods from a low durability class to a high durability class, making these woods suitable for outdoor use. The dimensional stability of these types of wood is greatly improved by the thermal modification, so that these light types of wood can be used as, for example, wall cladding. As a result, it is not necessary to use expensive and heavy types of wood for wall cladding, for example. This method is particularly advantageous for making domestic softwoods suitable for these applications, reducing the need for felling, and importing of tropical hardwoods, offering ecological benefits.

**Claims**

1. Method for thermal treatment of wood, wherein the wood is modified by the heat treatment, comprising the steps of:

   - placing the wood in an autoclave;
   - preheating the wood by heating the autoclave;
   - thermally modifying the wood at an autoclave temperature of at least 180°C and at most 230°C;
   - cooling the wood;

   **characterized in that** the temperature in the autoclave increases linearly during the preheating of the wood, wherein a constant pressure of at least 150 mbar and at most 300 mbar prevails in the autoclave and **in that** during thermal modification a pressure prevails in the autoclave which is at least 50 mbar higher than during preheating and at most 150 mbar higher than during preheating, wherein by constant pressure is meant that the pressure varies at most $\pm$ 10%.

2. Method according to claim 1, **characterized in that** during preheating, the temperature in the autoclave rises by at least 5°C per hour and at most 9°C per hour.

3. Method according to claim 1 or 2, **characterized in that** during preheating, the temperature in the autoclave rises to a maximum of 180°C.

4. The method according to any of the preceding claims 1-3, **characterized in that** during the cooling of the wood, the temperature in the autoclave drops by at least 15°C per hour and at most 25°C per hour.

5. The method according to any of the preceding claims 1-4, **characterized in that** during the thermal modification of the wood, the pressure in the autoclave rises incrementally, wherein the pressure rises at least 25 mbar and at most 50 mbar with each step.

6. The method according to any of the preceding claims 1-5, **characterized in that** during the thermal modification of the wood, the temperature in the autoclave rises incrementally, wherein with each step the temperature rises at least 10°C and at most 20°C.

7. The method according to any of the preceding claims 1-6, **characterized in that** the step of thermally modifying the wood lasts at least 4 hours and at most 8 hours.

8. The method according to any of the preceding claims 1-7, **characterized in that** planks or beams of wood are stacked on top of each other before being placed in the autoclave, wherein at and between both ends of the stack of wood slats are placed between each group of at most two stacked planks or beams of the stack of wood, wherein the slats have a spacing of at least 0.2 m and at most 0.8 m.

9. Method according to claim 8, **characterized in that** the slats are hollow metal profiles.

10. The method according to any of the preceding claims 1-9, **characterized in that** the autoclave extends from a first end to a second end in a longitudinal direction, wherein air in the autoclave is moved in a first direction transverse to the longitudinal direction of the autoclave by means of fans at the first end and the second end.

11. Method according to claim 10, **characterized in that** at the first end and at the second end of the autoclave, a deflector is rotated from a first position parallel to the first end and the second end of the autoclave, respectively, to a second position about an axis of rotation, wherein the axis of rotation is at a first edge of the deflector closest to the fan at the first end and the second end of the autoclave, respectively, and wherein the deflector is rotated so far that a distance along the length of the autoclave between a second edge of the deflector, opposite the first edge, and wood in the autoclave is at most 50 cm.

12. The method according to any of the preceding claims 1-11, **characterized in that** air is withdrawn from the autoclave via a condenser, wherein vapors and gases are condensed into liquid.

13. The method according to claim 12, **characterized in that** the amount of liquid that condenses per unit of time in the condenser is measured, wherein a transition is made from preheating the wood to thermally modifying the wood if the amount of liquid condensing per unit of time is less than 5% of a total amount of liquid condensed in the condenser up to that time.

14. The method according to any of the preceding claims 1-13, **characterized in that** a temperature sensor is fitted in the wood in the autoclave, for measuring the temperature in the core of the wood.

15. Use of a method according to any of the preceding claims 1-14 for the thermal treatment of ayous, fraké, tulipwood, softwood, poplar, or ash.

**Patentansprüche**

1. Verfahren zur Wärmebehandlung von Holz, wobei das Holz durch die Wärmebehandlung modifiziert wird, folgende Schritte umfassend:

   - Platzieren des Holzes in einem Autoklav,
   - Vorerwärmen des Holzes durch Erwärmen des Autoklavs,
   - thermisches Modifizieren des Holzes bei einer Autoklavtemperatur von mindestens 180°C und höchstens 230°C,
   - Abkühlen des Holzes,

   **dadurch gekennzeichnet dass** die Temperatur in dem Autoklav während des Vorheizens des Holzes linear steigt, wobei in dem Autoklav ein konstanter Druck von mindestens 150 mbar und höchstens 300 mbar herrscht und dass während der thermischen Modifizierung ein Druck in dem Autoklav herrscht, der mindestens 50 mbar höher als während des Vorerwärmens und höchstens 150 mbar höher als während des Vorerwärmens ist.

2. Verfahren nach Anspruch 1, **dadurch gekennzeichnet dass** die Temperatur in dem Autoklav während des Vorerwärmens um mindestens 5°C pro Stunde und höchstens 9°C pro Stunde steigt.

3. Verfahren nach Anspruch 1 oder 2, **dadurch gekennzeichnet dass** die Temperatur in dem Autoklav während des Vorerwärmens auf maximal 180°C steigt.

4. Verfahren nach einem der vorhergehenden Ansprüche 1-3, **dadurch gekennzeichnet dass** die Temperatur in dem Autoklav während des Abkühlens des Holzes um mindestens 15°C pro Stunde und höchstens 25°C pro Stunde fällt.

5. Verfahren nach einem der vorhergehenden Ansprüche 1-4, **dadurch gekennzeichnet dass** der Druck in dem Autoklav während der thermischen Modifizierung des Holzes schrittweise steigt, wobei der Druck mit jedem Schritt um mindestens 25 mbar und höchstens 50 mbar steigt.

6. Verfahren nach einem der vorhergehenden Ansprüche 1-5, **dadurch gekennzeichnet dass** die Temperatur in dem Autoklav während der thermischen Modifizierung des Holzes schrittweise steigt, wobei die Temperatur mit jedem Schritt um mindestens 10°C und höchstens 20°C steigt.

7. Verfahren nach einem der vorhergehenden Ansprüche 1-6, **dadurch gekennzeichnet dass** der Schritt des thermischen Modifizierens des Holzes mindestens 4 Stunden und höchstens 8 Stunden dauert.

8. Verfahren nach einem der vorhergehenden Ansprüche 1-7, **dadurch gekennzeichnet dass** Holzbohlen oder -balken vor dem Platzieren in dem Autoklav übereinander gestapelt werden, wobei an und zwischen beiden Enden des Holzstapels Leisten zwischen jeder Gruppe aus höchstens zwei gestapelten Bohlen oder Balken des Holzstapels platziert werden, wobei die Leisten einen Abstand von mindestens 0.2 m und höchstens 0.8 m aufweisen.

9. Verfahren nach Anspruch 8, **dadurch gekennzeichnet dass** die Leisten Metallhohlprofile sind.

10. Verfahren nach einem der vorhergehenden Ansprüche 1-9, **dadurch gekennzeichnet dass** sich der Autoklav in einer Längsrichtung von einem ersten Ende zu einem zweiten Ende erstreckt, wobei mittels Gebläsen an dem ersten Ende und dem zweiten Ende Luft in dem Autoklav in einer ersten Richtung quer zur Längsrichtung des Autoklavs bewegt wird.

11. Verfahren nach Anspruch 10, **dadurch gekennzeichnet dass** an dem ersten Ende und an dem zweiten Ende des Autoklavs ein Deflektor von einer ersten Position parallel zum ersten Ende beziehungsweise zum zweiten Ende des Autoklavs um eine Drehachse in eine zweite Position gedreht wird, wobei die Drehachse an einem ersten Rand des Deflektors nächst dem Gebläse an dem ersten Ende beziehungsweise dem zweiten Ende des Autoklavs liegt und wobei der Deflektor so weit gedreht wird, dass ein Abstand zwischen einem zweiten Rand des Deflektors, gegenüber dem ersten Rand, und Holz in dem Autoklav entlang der Länge des Autoklavs höchstens 50 cm beträgt.

12. Verfahren nach einem der vorhergehenden Ansprüche 1-11, **dadurch gekennzeichnet dass** über einen Kondensator Luft aus dem Autoklav gesogen wird, wobei Dämpfe und Gase zu Flüssigkeit kondensiert werden.

13. Verfahren nach Anspruch 12, **dadurch gekennzeichnet dass** die Menge der Flüssigkeit gemessen wird, die pro Zeiteinheit in dem Kondensator kondensiert, wobei ein Übergang vom Vorerwärmen des Holzes zum thermischen Modifizieren des Holzes erfolgt, wenn die Menge der Flüssigkeit, die pro Zeiteinheit in dem Kondensator kondensiert, geringer als 5 % einer Gesamtmenge ist, die bis zu diesem Zeitpunkt pro Zeiteinheit in dem Kondensator kondensiert ist.

14. Verfahren nach einem der vorhergehenden Ansprüche 1-13, **dadurch gekennzeichnet dass** in das Holz in dem Autoklav ein Sensor eingesetzt wird, um die Temperatur im Kern des Holzes zu messen.

15. Verwendung eines Verfahrens nach einem der vorhergehenden Ansprüche 1-14 zur thermischen Behandlung von Abachi, Fraké, Tulpenbaum, Nadelholz, Pappel oder Esche.


## Revendications

1. Procédé de traitement thermique du bois, dans lequel le bois est modifié par le traitement thermique, comprenant les étapes consistant à :

   - placer le bois dans un autoclave ;
   - préchauffer le bois en chauffant l'autoclave ;
   - modifier thermiquement le bois à une température d'autoclave d'au moins 180°C et d'au plus 230°C ;
   - refroidir le bois ;

   **caractérisé en ce que** la température dans l'autoclave augmente de façon linéaire pendant le préchauffage du bois, dans lequel une pression constante d'au moins 150 mbar et d'au plus 300 mbar règne dans l'autoclave et **en ce que,** pendant la modification thermique, la pression qui règne dans l'autoclave est supérieure d'au moins 50 mbar à celle du préchauffage et d'au plus 150 mbar à celle du préchauffage.

2. Procédé selon la revendication 1, **caractérisé en ce que** pendant le préchauffage, la température dans l'autoclave augmente d'au moins 5°C par heure et d'au plus 9°C par heure.

3. Procédé selon la revendication 1 ou 2, **caractérisé en ce que** pendant le préchauffage, la température dans l'autoclave augmente jusqu'à un maximum de 180 °C.

4. Procédé selon l'une quelconque des revendications précédentes 1-3, **caractérisé en ce que** pendant le refroidissement du bois, la température dans l'autoclave diminue d'au moins 15°C par heure et d'au plus 25°C par heure.

5. Procédé selon l'une quelconque des revendications précédentes 1-4, **caractérisé en ce que** pendant la modification thermique du bois, la pression dans l'autoclave augmente progressivement, dans lequel la pression augmente d'au moins 25 mbar et d'au plus 50 mbar à chaque étape.

6. Procédé selon l'une quelconque des revendications précédentes 1-5, **caractérisé en ce que** pendant la modification thermique du bois, la température dans l'autoclave augmente progressivement, dans lequel, à chaque étape, la température augmente d'au moins 10°C et d'au plus 20°C.

7. Procédé selon l'une quelconque des revendications précédentes 1-6, **caractérisé en ce que** l'étape de modification thermique du bois dure au moins 4 heures et au plus 8 heures.

8. Procédé selon l'une quelconque des revendications précédentes 1-7, **caractérisé en ce que** des planches ou des poutres de bois sont empilées les unes sur les autres avant d'être placées dans l'autoclave, dans lequel, aux deux extrémités de la pile de bois et entre celles-ci, des lattes en bois sont placées entre chaque groupe d'au plus deux planches ou poutres empilées de la pile de bois, dans lequel les lattes ont un espacement d'au moins 0.2 m et d'au plus 0.8 m.

9. Procédé selon la revendication 8, **caractérisé en ce que** les lattes sont des profilés métalliques creux.

10. Procédé selon l'une quelconque des revendications précédentes 1-9, **caractérisé en ce que** l'autoclave s'étend d'une première extrémité à une seconde extrémité dans une direction longitudinale, dans lequel l'air dans l'autoclave est déplacé dans une première direction transversale à la direction longitudinale de l'autoclave au moyen de ventilateurs au niveau de la première extrémité et de la seconde extrémité.

11. Procédé selon la revendication 10, **caractérisé en ce que,** au niveau de la première et au niveau de la seconde extrémité de l'autoclave, un déflecteur est tourné à partir d'une première position parallèle à la première extrémité et à la seconde extrémité de l'autoclave, respectivement, vers une seconde position autour d'un axe de rotation, dans lequel l'axe de rotation se trouve au niveau d'un premier bord du déflecteur le plus proche du ventilateur au niveau de la première extrémité et de la seconde extrémité de l'autoclave, respectivement, et dans lequel le déflecteur est tourné de telle sorte qu'une distance sur la longueur de l'autoclave entre un second bord du déflecteur, opposé au premier bord, et le bois dans l'autoclave est d'au plus 50 cm.

12. Procédé selon l'une quelconque des revendications précédentes 1-11, **caractérisé en ce que** l'air est retiré de l'autoclave au moyen d'un condenseur, dans lequel les vapeurs et les gaz sont condensés en liquide.

13. Procédé selon la revendication 12, **caractérisé en ce que** la quantité de liquide qui se condense par unité de temps dans le condenseur est mesurée, dans lequel une transition est effectuée entre le préchauffage du bois et la modification thermique du bois si la quantité de liquide qui se condense par unité de temps est inférieure à 5% de la quantité totale de liquide condensée dans le condenseur jusqu'à ce moment-là.

14. Procédé selon l'une quelconque des revendications précédentes 1-13, **caractérisé en ce qu'**un capteur de température est installé dans le bois dans l'autoclave, afin de mesurer la température au cœur du bois.

15. Utilisation d'un procédé selon l'une quelconque des revendications précédentes 1-14 pour le traitement thermique de l'ayous, du fraké, du tulipier, du résineux, du peuplier, ou du frêne.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014124354 A
- CN 108582377
- CN 110549450
- CN 112454576
- CN 111605013